# FASCICULE DE BREVET EUROPEEN

(11) **EP 0 480 787 B1**
(45) Date de publication et mention de la délivrance du brevet: **27.07.1994**
(21) Numéro de dépôt: 91402488.0
(22) Date de dépôt: 18.09.1991
(51) Int. Cl.: F01N 3/20

(54) **Moteur à combustion interne comprenant un circuit d'échappement muni d'un dispositif d'insufflation d'air**
Brennkraftmaschine mit einer Vorrichtung zum Einblasen von Luft in die Abgasanlage
Internal combustion engine with a device for the insufflation of air into the exhaust conduit

(30) Priorité: 09.10.1990 FR 9012434
(43) Date de publication de la demande: 15.04.1992
(73) Titulaire: AUTOMOBILES PEUGEOT, 75116 Paris (FR); AUTOMOBILES CITROEN, 92200 Neuilly-sur-Seine (FR)
(72) Inventeur: Laine, Gabriel, F-78570 Andresy (FR)
(74) Mandataire: Moncheny, Michel

(56) Documents cités:
- FR-A- 2 169 501
- US-A- 3 869 859
- US-A- 4 727 717

## Description

La présente invention concerne les moteurs à combustion interne, et plus particulièrement, un dispositif antipollution utilisé sur ces moteurs.

Pour satisfaire les normes concernant l'antipollution, on fait pénétrer de l'air dans les conduits d'échappement de manière à réaliser une post-combustion des gaz imbrûlés à la sortie de la chambre de combustion, ce qui réduit la teneur en gaz toxiques des gaz à la sortie du pot d'échappement.

Ceci est obtenu en aspirant de l'air frais grâce aux phases de pression-dépression régnant dans les conduits d'échappement ; à cet effet, on utilise un clapet anti-retour qui est ouvert par la dépression régnant dans les conduits d'échappement.

Dans un dispositif connu de ce genre, on dispose un clapet anti-retour par cylindre ; de l'air frais, fourni par exemple par le filtre à air du moteur, est envoyé à chacun des clapets anti-retour. Chaque clapet est relié au conduit d'échappement d'un cylindre par un tube qui débouche dans des canaux percés dans le conduit d'échappement et la culasse.

Un tel dispositif d'insufflation d'air est décrit dans le brevet américain 4 727 717; il comporte, pour chaque cylindre, un clapet anti-retour (L1...) relié au circuit d'échappement par un conduit en alimentation en air. Ce conduit d'alimentation en air ainsi que le clapet sont disposés dans le couvre-culasse, c'est à dire dans le logement des commandes des soupapes d'admission et d'échappement.

Ce dispositif présente un encombrement important du fait que la longueur des tubes reliant le clapet anti-retour au conduit d'échappement doit être relativement importante compte tenu des phénomènes accoustiques de pulsation des gaz d'échappement et des vibrations du moteur. Ainsi par exemple, on peut être amené à utiliser entre le clapet anti-retour et le conduit d'échappement un tube de dix millimètres de diamètre et de soixante dix centimètres de longueur.

De toute façon, il est très difficile de réaliser un dispositif qui puisse résister aux contraintes mécaniques dues à ces phénomènes de vibrations et la durée de vie de ce dispositif d'insufflation d'air dans le circuit d'échappement est donc réduite.

Enfin ces dispositifs connus d'insufflation d'air dans le circuit d'échappement sont relativement coûteux et inesthétiques.

La présente invention se propose de réaliser un dispositif d'insufflation d'air dans le circuit d'échappement d'un moteur dont l'encombrement est très réduit, qui est fiable et dont le prix de revient est réduit.

L'invention a pour objet un moteur à combustion interne comprenant un circuit d'échappement muni d'un dispositif d'insufflation d'air tel que décrit à la revendication 1.

De cette manière, le dispositif selon l'invention occupe un volume qui restait disponible et, par conséquent, n'augmente pas l'encombrement global du moteur.

Selon une autre caractéristique de l'invention, le conduit d'alimentation en air est réalisé dans une pièce massive qui est avantageusement fixée sur la culasse. De cette manière, le conduit d'alimentation est peu sensible aux vibrations du moteur, ce qui améliore nettement la fiabilité et la durée de vie du dispositif selon l'invention.

Avantageusement, le conduit d'alimentation en air présente la forme d'une courbe sinueuse, ce qui permet d'augmenter notablement sa longueur pour un encombrement réduit.

Selon une autre caractéristique de l'invention, le conduit d'alimentation d'air communique avec des trous de la culasse débouchant dans le conduit d'échappement au voisinage du siège de la soupape d'échappement. Ceci améliore le fonctionnement du dispositif antipollution.

Avantageusement, dans le cas où le moteur comporte deux soupapes d'échappement par cylindre, il comporte un trou de communication avec le conduit par soupape. Ceci augmente encore les performances du dispositif antipollution.

Selon un mode de réalisation de l'invention, les clapets anti-retour sont raccordés en amont avec un carter étanche logé entre les logements des commandes des soupapes et raccordé au filtre à air du moteur.

D'autres caractéristiques et avantages de l'invention ressortiront de la description qui suit d'exemples de réalisation, faite en se référant aux dessins annexés sur lesquels :
- la figure 1 est une vue schématique d'un dispositif d'insufflation d'air dans le circuit d'échappement d'un moteur représenté de manière schématique ;
- la figure 2 représente de manière schématique le haut de la culasse d'un moteur à cylindres en ligne ;
- la figure 3 est une vue de dessus du moteur de la figure 2 ;
- la figure 4 est une vue en coupe transversale d'un premier mode de réalisation de l'invention ;
- la figure 5 est une vue en coupe longitudinale du mode de réalisation de la figure 4 ;
- la figure 6 est une coupe suivant la ligne VI-VI de la figure 5 ;
- la figure 7 est une vue en coupe schématique d'un deuxième mode de réalisation de l'invention ; et
- la figure 8 est une vue en coupe longitudinale du mode de réalisation de la figure 7.

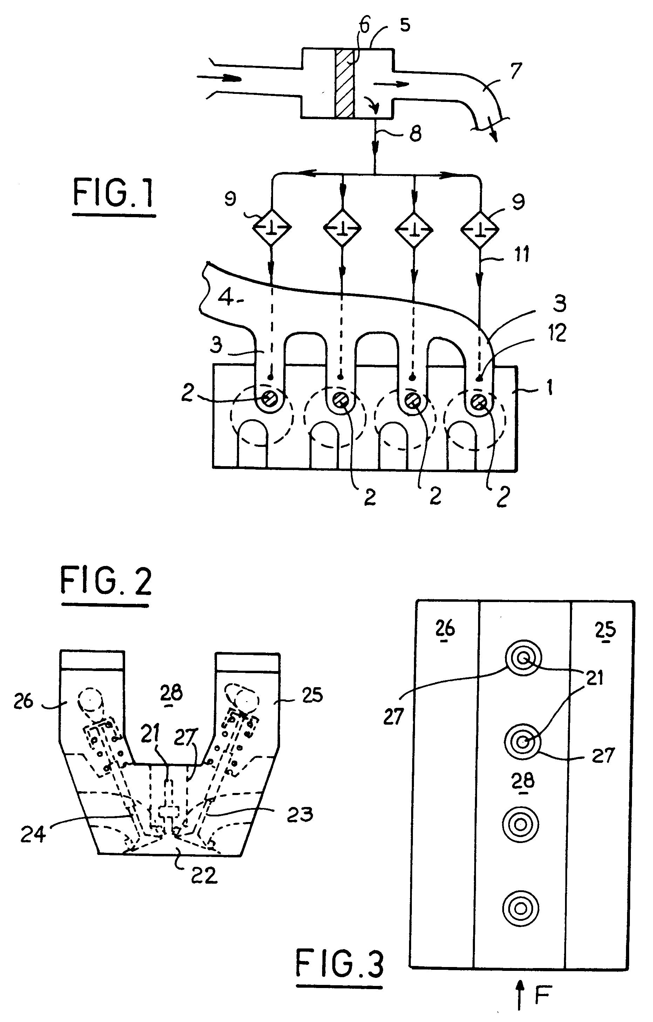

On a représenté sur la figure 1, de manière schématique, un moteur à quatre cylindres en ligne dont on voit la partie supérieure de la culasse 1 ; les soupapes d'échappement ont été schématisées en 2 et on peut voir, pour chaque cylindre, le conduit d'échappement 3 qui débouche dans le collecteur d'échappement 4.

L'insufflation d'air dans les conduits d'échappement s'effectue à partir du filtre à air 5 en aval de la cartouche filtrante 6, la canalisation d'admission d'air vers le moteur étant représentée en 7.

L'air prélevé par une canalisation générale 8 dans le filtre à air 5 est envoyé sur quatre circuits d'insufflation d'air, un par cylindre, qui comportent chacun un clapet anti-retour 9 et un conduit d'alimentation en air 11. Chaque conduit débouche dans un orifice 12 aménagé dans le conduit d'échappement 3 et le haut de la culasse 1.

La longueur du conduit d'alimentation en air 11 doit être importante pour absorber les phénomènes dûs aux vibrations du moteur et aux pulsations de pression existant dans le système d'échappement. Il en résulte un encombrement important du dispositif d'insufflation d'air connu représenté sur la figure 1.

Les figures 2 et 3 représentent de manière schématique un moteur à combustion interne à quatre cylindres en ligne, la figure 3 étant une vue de dessus et la figure 2 une vue de côté du haut de la culasse du moteur.

La bougie 21 est fixée dans la chambre de combustion 22 qui est disposée au-dessus du cylindre (non représenté). Pour chaque cylindre, les soupapes d'admission 23 et les soupapes d'échappement 24, qui peuvent être au nombre de deux par cylindre, sont disposées de part et d'autre de la bougie 21. Le dispositif de commande des soupapes d'admission 23 et le dispositif de commande des soupapes d'échappement 24, qui comprennent notamment les tiges de soupapes, les poussoirs, les culbuteurs et/ou les arbres à cames, sont disposés chacun dans un logement latéral longitudinal 25, respectivement 26.

On voit qu'il subsiste un espace 28 sensiblement parallélépipèdique entre ces deux logements 25 et 26 et au-dessus des puits 27 de passage des bougies 21.

Conformément à l'invention, on utilise cet espace pour loger le dispositif antipollution par insufflation d'air. Du fait que cet espace était disponible, l'encombrement général du moteur n'est pas modifié.

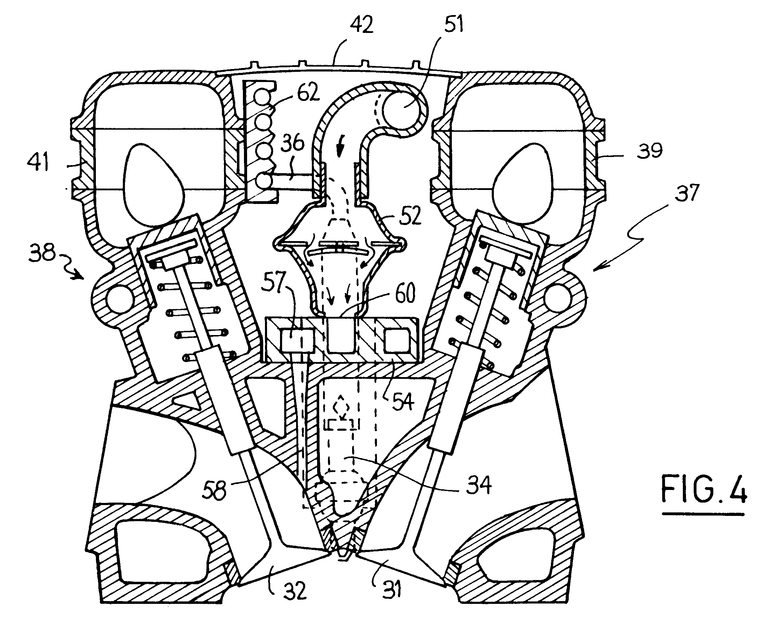

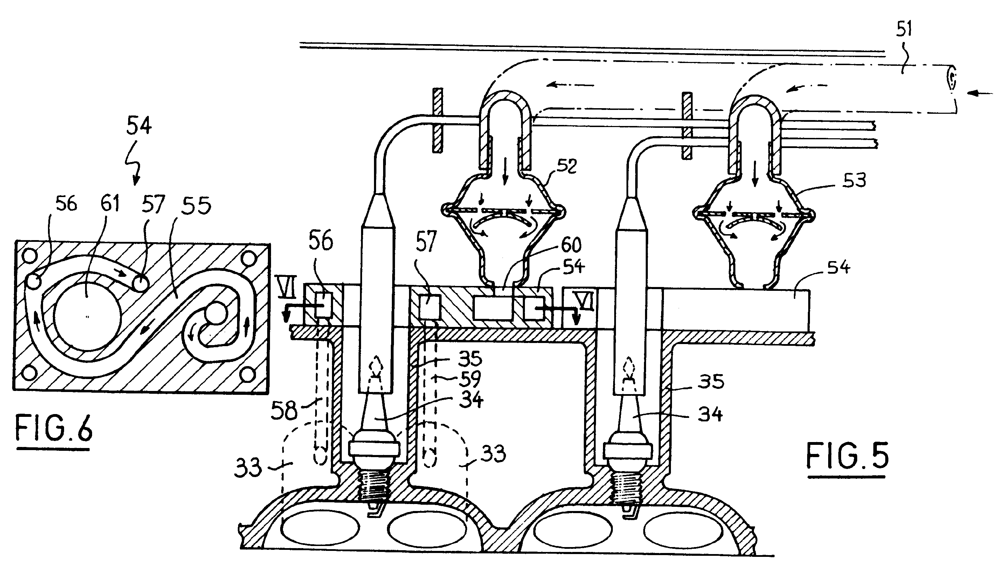

Les figures 4 à 6 illustrent un premier mode de réalisation de l'invention appliqué à un moteur à cylindres en ligne. La figure 4 est une vue en coupe transversale du haut du moteur, la figure 5 est une vue en coupe longitudinale partielle et la figure 6 est une coupe suivant la ligne VI-VI de la figure 5.

On retrouve sur ces figures des soupapes d'admission 31 et des soupapes d'échappement 32 ; comme on peut le voir sur la figure 5, le moteur est du type multisoupapes et comporte donc deux tubulures d'échappement 33 par cylindre.

On voit également les bougies 34 diposées dans leur puits de bougie 35 et alimentées par des fils de bougie 36. On retrouve également sur cette figure les deux logements 37 et 38 dans lesquels se trouvent les organes des commandes des soupapes 31 et 32, à savoir les tiges, les ressorts, les poussoirs et l'arbre à cames logé dans le carter d'arbre à cames 39, respectivement 41.

Un couvercle de carter 42 ferme l'espace se trouvant entre les deux logements 37 et 38 et les puits de bougie 35. Dans cet espace se trouve placé le système d'insufflation d'air dans les conduits d'échappement 33. Le dispositif d'insufflation d'air comprend une canalisation d'alimentation générale 51 à laquelle sont connectés les clapets anti-retour 52 et 53.

La partie aval des clapets anti-retour 52 et 53 est connectée à un conduit d'alimentation en air qui est réalisé dans une pièce massive 54 qui est représentée en coupe sur la figure 6. Dans cette pièce massive 54 est réalisé un circuit d'alimentation en air à parcours sinueux 55. Cette pièce massive 54 comporte donc une sorte de circuit d'alimentation en air intégré ; elle est fixée sur la partie centrale du dessus de la culasse au niveau du bord supérieur des puits de bougies 35, par exemple au moyen de vis.

Le circuit d'air 55 réalisé dans la pièce 54 présente un parcours sinueux en labyrinthe de manière à présenter une longueur maximale; ce circuit s'étend de l'entrée d'air 60 reliée au clapet anti-retour vers des ouvertures 56 et 57 qui communiquent avec des trous 58 et 59 aménagés dans la partie supérieure de la culasse et débouchant dans les conduits d'échappement 33 très près du siège de la soupape d'échappement 32.

Le parcours du circuit d'air 55 décrit une boucle autour d'un trou cylindrique central 61 de la pièce 54 qui se trouve dans le prolongement du puits 35 de la bougie.

Sur la figure 4 on voit que les fils de bougie 36 sont fixés sur une barrette 62 fixée sur le carter d'arbre à cames 41, alors que la canalisation d'alimentation générale en air 51 est fixée au voisinage de l'autre carter d'arbre à cames 39.

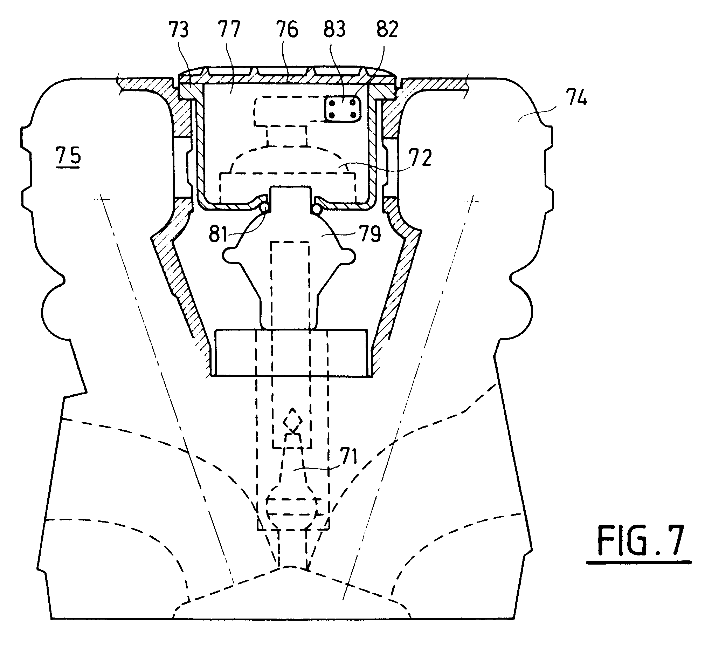

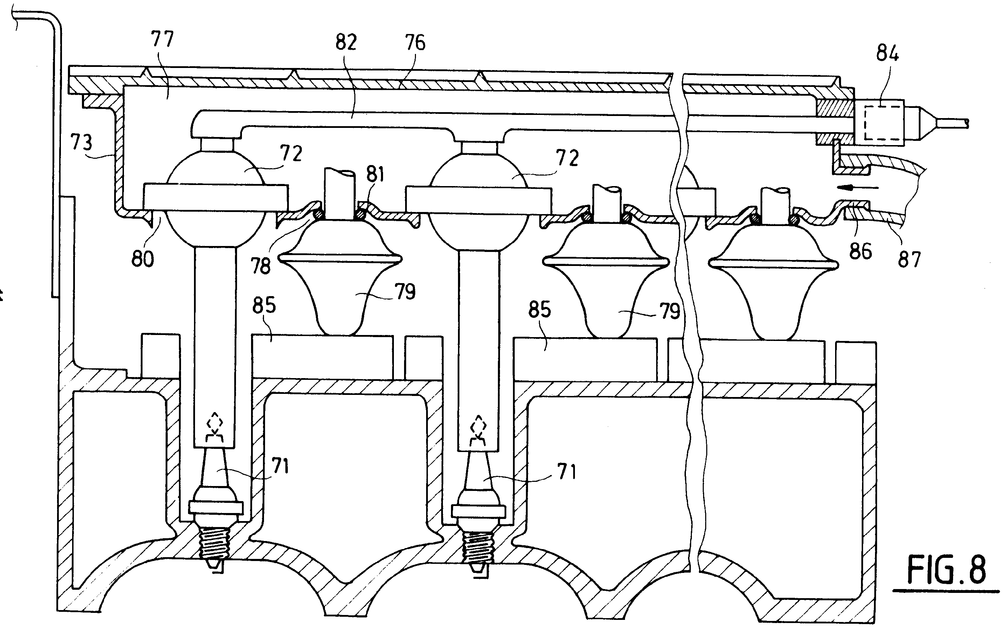

Les figures 7 et 8 représentent un deuxième mode de réalisation de l'invention dans lequel chaque bougie 71 comporte une bobine individuelle 72. Les figures 7 et 8 correspondent respectivement aux figures 4 et 5 du premier mode de réalisation.

Un carter 73 est fixé à la partie supérieure de l'espace compris entre les deux carters d'arbre à cames 74 et 75. Ce carter 73 constitue avec son couvercle 76 une enceinte étanche 77 constituant la canalisation d'alimentation générale en air reliée au filtre à air.

Ce carter comporte dans son fond des trous 80 dans lesquels les bobines 72 sont fixées de manière étanche. Ce carter comprend également d'autres trous 78 dans son fond qui débouchent dans le clapet anti-retour 79 ; l'étanchéité de la fixation du clapet anti-retour 79 dans le trou 78 du carter 73 est assurée au moyen d'un joint 81.

Les fils de bougie 82 sont logés dans une barrette de connexion 83 qui s'étend longitudinalement dans le carter 73 et le traverse de manière étanche au moyen d'un connecteur 84.

La partie aval des clapets anti-retour 72 est reliée à un conduit d'air intégré 85 analogue au conduit 54 du premier mode de réalisation. Le carter 73 présente à l'une de ses extrémités une embouchure 86 sur laquelle est raccordée une conduite 87 provenant du filtre à air.

On voit que l'invention permet de réaliser une insufflation d'air dans les circuits d'échappement qui ne modifie pas l'encombrement global du moteur. Les couvercles permettent de masquer l'ensemble de ce dispositif d'insufflation d'air, ce qui améliore l'esthétique générale du bloc moteur.

Le fait de réaliser le circuit de manière sinueuse permet d'obtenir une longueur suffisamment importante pour éviter les phénomènes dûs aux vibrations. De plus, le circuit d'alimentation en air des conduits d'échappement étant réalisé en une pièce massive fixée sur la culasse, les phénomènes de vibrations sont très fortement réduits.

En outre, dans le cas représenté en variante, le carter sert également de support aux bobines unitaires et l'air circulant autour de celles-ci leur assure un meilleur refroidissement.

La simplicité de la conception d'une part, améliore la fiabilité et, d'autre part, diminue le prix de revient.

Par ailleurs, l'invention permet d'insuffler l'air de post-combustion très près des sièges de soupapes ce qui améliore l'efficacité de ce système de post-combustion.

L'invention réalise ces objectifs tout en permettant un accès facile aux bougies, puisque les conduits d'air intégrés permettent le passage de ces dernières.

De plus, l'invention permet de fixer les fils d'alimentation de bougies ainsi que les éventuelles bobines branchées sur ces dernières de manière à obtenir un ensemble rigide peu sujet aux vibrations.

L'invention s'applique à toutes les structures de moteur à combustion interne et, en particulier, aux moteurs en V.

## Revendications

1. Moteur à combustion interne comprenant un circuit d'échappement muni d'un dispositif d'insufflation d'air comportant, pour chaque cylindre un clapet anti-retour (9,52,53,79) et un conduit d'alimentation en air (11,54,55) reliant ledit clapet anti-retour au conduit d'échappement (3,33), caractérisé en ce que ledit dispositif d'insufflation d'air est entièrement disposé dans l'espace (28) compris entre le logement des commandes des soupapes d'admission (25,37,74), le logement des commandes des soupapes d'échappement (26,38,75) et la partie supérieure des puits de bougie (35) de la culasse.

2. Moteur à combustion interne selon la revendication 1, caractérisé en ce que le conduit (55) d'alimentation en air est réalisé dans une pièce massive (54).

3. Moteur à combustion interne selon la revendication 2, caractérisé en ce que ladite pièce massive (54) est fixée sur la culasse.

4. Moteur à combustion interne selon la revendication 2 ou 3, caractérisé en ce que le conduit (55) d'alimentation en air présente la forme d'une courbe sinueuse.

5. Moteur à combustion interne selon l'une quelconque des revendications 2 à 4, caractérisé en ce que la pièce (54) dans laquelle est réalisé le conduit (55) comporte un trou (61) aligné avec le puits (35) de la bougie et en ce que le conduit (55) forme une boucle autour dudit trou (61).

6. Moteur à combustion interne selon l'une quelconque des revendications 2 à 5, caractérisé en ce que le conduit d'alimentation d'air (11,54,55) communique avec des trous (58) de la culasse débouchant dans le conduit d'échappement (33) au voisinage du siège de la soupape d'échappement (32).

7. Moteur à combustion interne selon la revendication 6, caractérisé en ce que, dans le cas où il comporte deux soupapes d'échappement par cylindre, il comporte un trou (58) de communication avec le conduit (55) par soupape.

8. Moteur à combustion interne selon l'une quelconque des revendications 1 à 7, caractérisé en ce que les clapets anti-retour (9,52,53,79) sont raccordés en amont avec un carter étanche (73) logé entre les logements des commandes des soupapes (25,26,37,38,74,75) et raccordé au filtre à air du moteur.

9. Moteur à combustion interne selon la revendication 8, caractérisé en ce que chaque bougie comporte une bobine individuelle disposée sous le carter (73).

10. Moteur à combustion interne selon la revendication 8 ou 9, caractérisé en ce que les fils de bougie sont fixés dans le carter précité.

## Patentansprüche

1. Brennkraftmaschine mit einer Abgasanlage, die mit einer Vorrichtung zum Einblasen von Luft versehen ist, die für jeden Zylinder ein Rückschlagventil (9, 52, 53, 79) und eine Luftzufuhrleitung (11, 54, 55) besitzt, die das Rückschlagventil mit der Abgasleitung (3, 33) verbindet, dadurch gekennzeichnet, daß die Vorrichtung zum Einblasen von Luft vollständig in dem Raum (28) angeordnet, der zwischen der Kammer zur Aufnahme der Steuerorgane der Einlaßventile (25, 37, 74), der Kammer zur Aufnahme der Antriebsorgane der Auslaßventile (26, 38, 75) und dem oberen Teil der Zündkerzenschächte (35) des Zylinderkopfs liegt.

2. Brennkraftmaschine nach Anspruch 1, dadurch gekennzeichnet, daß die Luftzufuhrleitung (55) in einem massiven Teil (54) ausgebildet ist.

3. Brennkraftmaschine nach Anspruch 2, dadurch gekennzeichnet, daß das massive Teil (54) auf dem Zylinderkopf befestigt ist.

4. Brennkraftmaschine nach Anspruch 2 oder 3, dadurch gekennzeichnet, daß die Luftzufuhrleitung (55) die Form einer gewundenen Kurve hat.

5. Brennkraftmaschine nach einem der Ansprüche 2 bis 4, dadurch gekennzeichnet, daß das Teil (54), in dem die Leitung (55) gebildet ist, ein mit dem Schacht (35) der Zündkerze fluchtendes Loch (61) besitzt und daß die Leitung (55) um dieses Loch (61) herum eine Schleife bildet.

6. Brennkraftmaschine nach einem der Ansprüche 2 bis 5, dadurch gekennzeichnet, daß die Luftzufuhrleitung (11, 54, 55) mit Löchern (58) des Zylinderkopfs in Verbindung ist, die in die Abgasleitung (33) in Nähe des Sitzes des Auslaßventils (32) münden.

7. Brennkraftmaschine nach Anspruch 6, dadurch gekennzeichnet, daß sie in dem Fall, in dem sie zwei Auslaßventile pro Zylinder besitzt, ein Loch (58) zur Verbindung mit der Leitung (55) pro Ventil besitzt.

8. Brennkraftmaschine nach einem der Ansprüche 1 bis 7, dadurch gekennzeichnet, daß die Rückschlagventile (9, 52, 53, 79) eingangsseitig an ein dichtes Gehäuse (73) angeschlossen sind, das zwischen den Kammern zur Aufnahme der Steuerorgane der Ventile (25, 26, 37, 38, 74, 75) angeordnet ist und an den Luftfilter des Motors angeschlossen ist.

9. Brennkraftmaschine nach Anspruch 8, dadurch gekennzeichnet, daß jede Zündkerze eine eigene Spule besitzt, die unter dem Gehäuse (73) angeordnet ist.

10. Brennkraftmaschine nach Anspruch 8 oder 9, dadurch gekennzeichnet, daß die Zündkerzendrähte in dem Gehäuse befestigt sind.

## Claims

1. An internal combustion engine comprising an exhaust system provided with an air insufflation device comprising, for each cylinder a non-return valve (9,52,53,79) and an air feed duct (11,54,55) connecting the said non-return valve to the exhaust duct (3,33), characterised in that the said air insufflation device is entirely disposed in the space (28) comprised between the housing of the controls of the inlet valves (25,37,74), the housing of the controls of the exhaust valves (26,38,75) and the upper part of the spark plug wells (35) of the cylinder head.

2. The internal combustion engine according to Claim 1, characterised in that the air feed duct (55) is constructed in one solid piece (54).

3. The internal combustion engine according to Claim 2, characterised in that the said solid piece (54) is mounted on the cylinder head.

4. The internal combustion engine according to Claim 2 or 3, characterised in that the air feed duct (55) has the shape of a sinuous curve.

5. The internal combustion engine according to any of Claims 2 to 4, characterised in that the piece (54) in which is constructed the duct (55) comprises a hole (61) aligned with the spark plug well (35) and in that the duct (55) forms a loop around the said hole (61).

6. The internal combustion engine according to any of Claims 2 to 5, characterised in that the air feed duct (11,54,55) communicates with holes (58) in the cylinder head opening into the exhaust duct (33) in the vicinity of the seating of the exhaust valve (32).

7. The internal combustion engine according to Claim 6, characterised in that, in the case where it comprises two exhaust valves per cylinder, it comprises one hole (58) for communication with the duct (55) per valve.

8. The internal combustion engine according to any of Claims 1 to 7 characterised in that the non-return valves (9,52,53,79) are connected upstream with a leaktight casing (73) housed between the housings of the controls of the valves (25,26,37,38,74,75) and connected to the air filter of the engine.

9. The internal combustion engine according to Claim 8, characterised in that each spark plug comprises an individual coil disposed under the casing (73).

10. The internal combustion engine according to Claim 8 or 9, characterised in that the spark plug leads are secured in the above-mentioned casing.
